# NEUE EUROPÄISCHE PATENTSCHRIFT

(11) **EP 1 147 968 B2**
(45) Veröffentlichungstag und Bekanntmachung des Hinweises auf die Entscheidung über den Einspruch: **26.08.2009**
(45) Hinweis auf die Patenterteilung: 10.05.2006
(21) Anmeldenummer: 01100555.0
(22) Anmeldetag: 10.01.2001
(51) Int. Cl.: B62B 3/06

(54) **Gabelhubwagen mit einem Fünfradfahrwerk**
Five wheeled fork lift truck
Transpalette à cinq roues

(30) Priorität: 20.04.2000 DE 10022400
(43) Veröffentlichungstag der Anmeldung: 24.10.2001
(73) Patentinhaber: Jungheinrich Aktiengesellschaft, 22047 Hamburg (DE)
(72) Erfinder: Krenzin, Marcel, 24576 Bad Bramstedt (DE)
(74) Vertreter: Hauck Patent- und Rechtsanwälte

(56) Entgegenhaltungen:
- EP-A- 0 670 256
- EP-A- 0 919 404
- EP-A1- 0 584 704
- EP-B1- 0 480 817
- DE-A- 1 750 706
- DE-A- 19 807 849
- DE-A1- 4 205 150
- DE-A1- 19 753 412
- FR-A- 989 417
- FR-A- 2 606 765
- US- - 2 660 449

## Beschreibung

Die Erfindung bezieht sich auf einen Gabelhubwagen mit einem Fünfradfahrwerk nach dem Oberbegriff des Patentanspruchs 1.

Aus EP 0 670 256 B 1 ist ein Hubwagen bekannt geworden, bei dem das Antriebsrad höhenunbeweglich gelagert ist und die Stützrollen zu beiden Seiten des Antriebsrades über Federn abgestützt sind. Die Widerlager der Federn sind über eine Koppelstange miteinander verbunden. Aus EP 0 480 817 B 1 ist bekannt, die Stützrollen über eine Koppelstange miteinander zu koppeln und eine zentrale Feder auf die Koppelstange einwirken zu lassen. Die Feder wirkt auf einen Arm an der Koppelstange und erzeugt auf diese Weise eine Vorspannung und damit einen entsprechenden Anpressdruck am Untergrund.

Aus EP 0 667 276 ist ein Gabelhubwagen bekannt geworden, bei dem der Anpressdruck der Stützräder am Untergrund abhängig gemacht ist von der Position des Mastes. Bei dem Gabelhubwagen kann der Mast relativ zum Antriebsteil verfahren werden. Aus EP 0 919 404 A2 ist bekannt geworden, die Stützräder eines Gabelhubwagens über eine Feder zu beaufschlagen und außerdem der Feder entgegenwirkend ein Gestänge vorzusehen, das mit dem Hubzylinder des Gabelhubwagens gekoppelt ist. Bei steigender Last wird die Wirkung der Federn zunehmend aufgehoben. Dadurch sinkt der Pressdruck der Stützräder am Untergrund.

Aus DE 197 53 412 ist bekannt, einer Stützrolle eines Gabelhubwagens ein steuerbares Stellorgan zuzuordnen zur Veränderung der Aufstandskraft der Stützrolle. Das Stellorgan wird von einem Betriebsparameter des Gabelhubwagens gesteuert, beispielsweise dem Druck im Hubzylinder, der Hubhöhe der aufgenommenen Last usw. Aus DE 198 07 849 ist ebenfalls bekannt, die Stützräder über eine Koppelstange zu koppeln und auf die Koppelstange ein Stellglied wirken zu lassen. Das Stellglied ist in seiner Kraft abhängig von einem Betriebsparameter des Gabelhubwagens. Bezüglich der Betriebsparameter gelten die obigen Angaben.

Der Erfindung liegt die Aufgabe zugrunde, einen Gabelhubwagen mit einem Fünfradfahrwerk zu schaffen, bei dem für unterschiedliche Anwendungen eine maximale Traktion bzw. Bremswirkung des Antriebsrads erzielt wird bei größtmöglicher Seitenstabilität.

Diese Aufgabe wird durch die Merkmale des Anspruchs 1 gelöst.

Bei der erfindungsgemäßen Lösung wirkt zusätzlich zu einer zentralen Feder ein Dämpferelement auf die Koppelstange. Das Dämpferelement kann ein Drehdämpfer oder ein linear wirkender Hydraulikdämpfer sein.

Bei Niederhubfahrzeugen bedeutet die beschriebene Kopplung der Stützräder, dass die Stützkraft der Koppelstange nicht proportional zur aufgenommenen Nutzlast variiert werden muss, da die Last an ihrem geometrischen Ort auf den Gabelzinken immer zur Seitenstabilisierung beiträgt und zu einem lastabhängigen Antriebsraddruck führt, sofern der Antrieb höhenunabhängig im Rahmen eingebunden ist.
Hochhubfahrzeuge hingegen benötigen bei ansteigender Hubhöhe eine starre Fahrwerksstruktur. Die Kraftbeaufschlagung der Koppelstange muss derart ausgelegt sein, dass durch Bodenunebenheiten und Antriebsradverschleiß kein gravierender Antriebsraddruckverlust eintritt. Durch die erfindungsgemäße Lösung wird eine Aufteilung in statischer und temporärer Stützrollenlast erzielt. Die Aufnahme der statischen Last erfolgt üblicherweise durch die Koppelstange und die auf diese wirkende Feder. Eine temporäre Stützrollenlast wird durch den Dämpfer aufgefangen.

Mit Hilfe der erfindungsgemäßen Lösung lässt sich das Fünfradfahrwerk so auslegen, dass eine maximale Antriebsradtraktion erhalten wird bei größtmöglicher Seitenstabilität des Flurförderzeugs. Die Kopplung eines Dämpfers mit der Koppelstange hat zudem den Vorteil, dass das Dämpfungsvermögen nur dem eines einzigen Dämpfers für unabhängige Stützrollen entsprechen muss, wenn sie mit einem Dämpfer versehen wurden. Der Aufwand für Dämpfer ist daher relativ gering.

Aus der bereits erwähnten EP 0 480 871 B1 ist bekannt, als zentrale Feder eine Schraubenfeder zu wählen, die auf einen Hebelarm an der Koppelstange einwirkt. Nach einer Ausgestaltung der Erfindung ist vorgesehen, dass die Stabilisierungsfeder von einem Torsionsfederelement, insbesondere einem Torsionsstab gebildet ist, der in der hohlen Koppelstange angeordnet ist, der an einem Ende drehfest mit dem Rahmen und der am anderen Ende drehfest mit der Koppelstange verbunden ist. Auf diese Weise ist die Feder platzsparend angeordnet. Ein zusätzlicher Bauraum für Druckfedern sowie für deren Vorspannung entfällt.

Als Torsionsfederelement ist auch eine Anordnung von einem Vierkantstab in einem Vierkantrohr bekannt geworden (Firmenschrift "ROSTA-Technologie"), bei dem zwischen dem Stab und dem Rohr jeweils in den Ecken des Rohres vorgespannte Gummikörper angeordnet sind. Ein solches Element kann ebenfalls als federabgestützte Koppelstange verwendet werden.

Nach einer weiteren Ausgestaltung der Erfindung ist ein Lagerbock für die Koppelstange die Drehmomentstütze für den Torsionsstab und in einer Aufnahmeausnehmung des Rahmens aufgenommen. Hierzu können parallel beabstandete Blechplatten am Rahmen vorgesehen werden, wobei eine eine entsprechende Ausnehmung aufweist.

Wie schon erwähnt, ist bei ansteigender Hubhöhe eine starre Fahrwerksstruktur erwünscht. Daher sieht eine Ausgestaltung der Erfindung vor, dass ein Verriegelungszylinder vorgesehen ist, der in Abhängigkeit von einem Betriebsparameter verstellbar ist und der den Auslenkweg der Stützrolle nach oben begrenzt. Der Betriebsparameter ist vorzugsweise die Hubhöhe der Last, wobei alternativ auch das Lastgewicht der Lenkwinkel oder der Bremsvorgang genommen werden kann oder eine Kombination der Parameter. Bei entsprechender Hubhöhe kann zum Beispiel die Koppelstange völlig verriegelt sein und daher eine Anhebung der Stützrollen verhindern.

Nach einer anderen Ausgestaltung der Erfindung kann ein Kraftglied vorgesehen sein, das ein Drehmoment auf den Torsionsstab erzeugt zur Erzeugung einer entsprechenden Vorspannung, z.B. in Form eines Hydraulikzylinders, der auf einen drehfest am Torsionsstab befestigten Hebelarm wirkt. Die Vorspannung kann wiederum in Abhängigkeit von Betriebsparametern verstellt werden.

Nach einer weiteren Ausgestaltung der Erfindung bilden die Koppelstange und die die Stützrollen lagernden Arme sowie der Torsionsstab in der Koppelstange eine komplette Einheit, die vorgefertigt am Rahmen des Flurförderzeugs angebracht werden kann.

Ein Ausführungsbeispiel der Erfindung wird nachfolgend anhand von Zeichnungen näher erläutert.
- Fig. 1: zeigt perspektivisch ein Stützrollenpaar für einen Gabelhubwagen.
- Fig. 2: zeigt die Rückansicht der Konstruktion nach Fig. 1.
- Fig. 3: zeigt die Seitenansicht der Konstruktion nach Fig. 1.
- Fig. 4: zeigt eine Draufsicht auf die kombinierte Lagerung der Stützrollen der Konstruktion nach den Figuren 1 bis 3.
- Fig. 5: zeigt einen Schnitt durch die Darstellung nach Fig. 7 entlang der Linie 5-5.
- Fig. 6: zeigt die perspektivische Darstellung der Lagerungskonstruktion nach Fig. 4.
- Fig. 7: zeigt die Draufsicht auf die Darstellung nach Fig. 6.
- Fig. 8: zeigt die Rückansicht des Teils nach Fig. 7 in Richtung Pfeil 8.
- Fig. 9: zeigt die Seitenansicht des Teils nach Fig. 7 in Richtung Pfeil 9.
- Fig. 10: zeigt perspektivisch eine Verriegelungsvorrichtung für die Stützrollenanordnung nach der Erfindung.
- Fig. 11: zeigt eine Abwandlung der Stützrollenanordnung mit einer Vorrichtung zur Änderung der Federvorspannung.

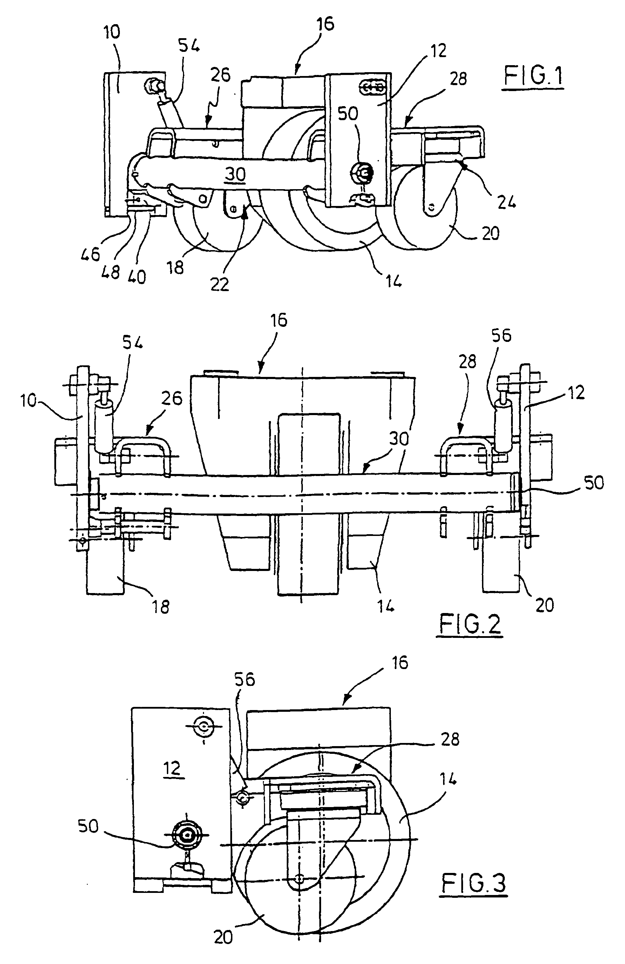

In den Figuren 1 und 2 sind zwei vertikale parallel angeordnete im Abstand verlaufende Platten 10, 12 dargestellt, die mit dem nicht gezeigten Rahmen eines nicht gezeigten Fünfrad-Gabelhubwagens verbunden sind. In der Mitte zwischen den Platten 10, 12 ist ein Antriebsrad 14 zu erkennen, das in einem Getriebe mit Lenklager 16, das auch den Antrieb enthalten kann, um eine horizontale Achse gelagert ist. Die Lagerung des Antriebsrads 14 ist höhenunbeweglich.

Auf beiden Seiten des Antriebsrades 14 sind Stützräder 18, 20 angeordnet. Die Stützräder sind in Lagerbauteilen 22, 24 um eine vertikale Achse gelagert. Die Lagerbauteile, die u.a. eine Gabel enthalten, werden im Einzelnen nicht näher beschrieben, da sie an sich bekannt sind. Die Lagerbauteile 22, 24 sind um eine horizontale Achse in Armen 26, 28 verschwenkbar gelagert. Auf die Konstruktion der Arme wird in Verbindung mit nachstehenden Figuren noch näher eingegangen.

Auf noch zu beschreibende Weise ist mit den hinteren Enden der Arme 26, 28 eine drehbar gelagerte Koppelstange 30 verbunden, wodurch die Stützrollen 18, 20 nur gemeinsam in der Höhe verstellt werden können. Die Koppelstange 30 ist auf noch zu beschreibende Weise in den Platten 10, 12 festgelegt.

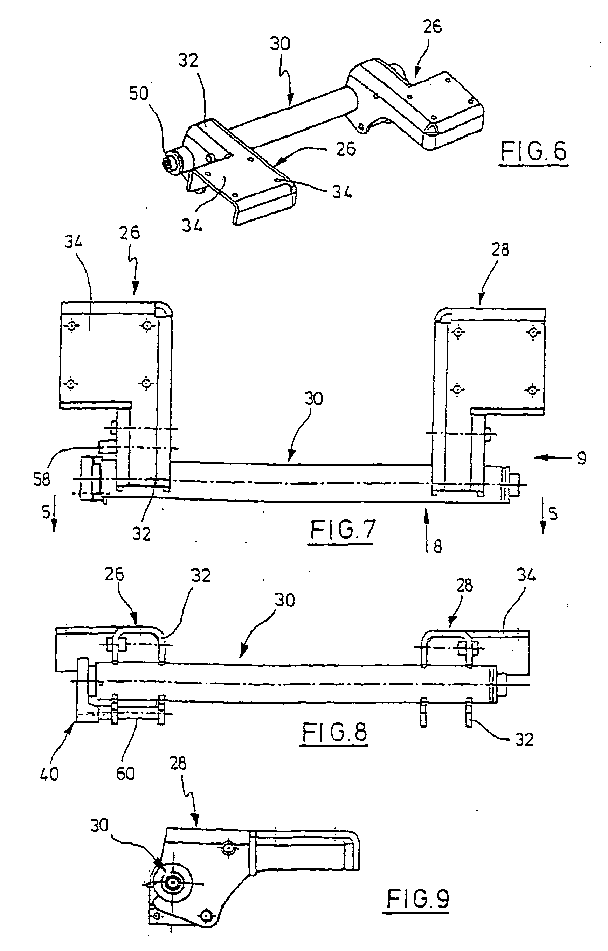

Aus den Figuren 6 und 7 geht hervor, dass die Arme in Draufsicht L-Form haben. Der hintere im Querschnitt annähernd U-förmige Abschnitt 32 bildet eine hintere Ausnehmung, in die die Koppelstange 30 eingeschoben ist und darin verschweißt werden kann. Der vordere breitere Abschnitt 34 ist mit einem Winkelprofil versehen derart, dass das Lagerbauteil 22 bzw. 24 der Stützrollen 18, 20 auf einfache Weise angebracht werden kann. Dies geschieht mit Hilfe einer Platte, die das Lagerbauteil 22, 24 mit dem Abschnitt 34 über eine Schraubverbindung verbindet.

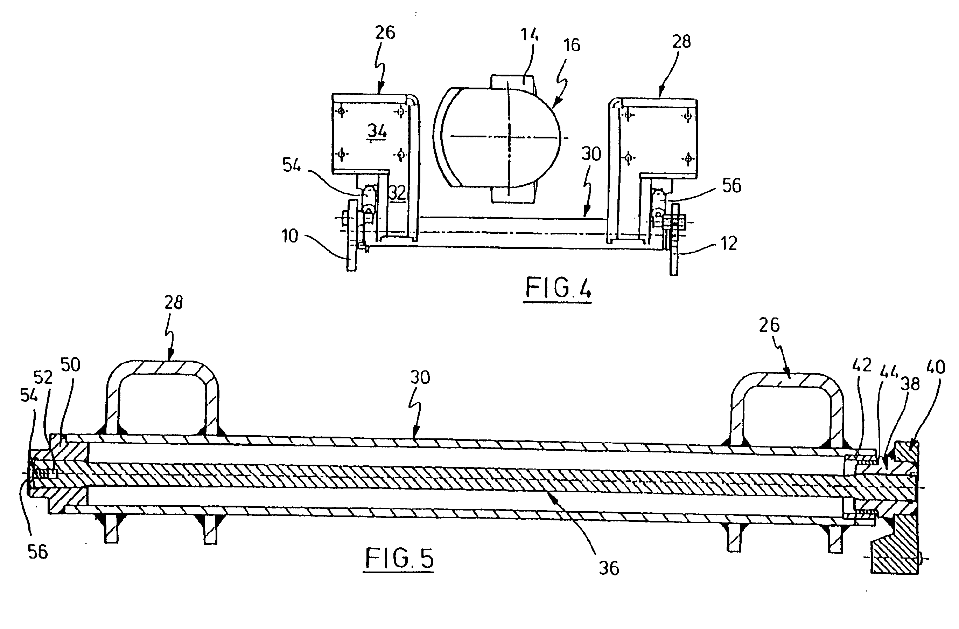

Wie aus Fig. 5 hervorgeht, ist die Koppelstange 30 hohl und im Inneren der Koppelstange ist ein Torsionsstab 36 angeordnet. Der Torsionsstab 36 hat an den Enden einen Vierkantabschnitt oder eine Vielkeilverzahnung etc., und der Vierkantabschnitt am rechten Enden sitzt in einem zylindrischen Lagerbock 38, der seinerseits mit einem Abschnitt in einer Drehmomentstütze 40 befestigt ist. Mittels zweier Gleitbuchsen 42, 44, von denen die erstere fest in der Koppelstange 30 sitzt und die zweite auf dem Lagerbock 38, ist die Koppelstange 30 auf dem Lagerbock 38 drehbar. Wie in Fig. 1 zu erkennen, sitzt die Drehmomentstütze 40 in einem nach unten offenen Schlitz 46 der Platte 10, wobei der Schlitz nach unten durch eine Spannhülse 48 festgelegt ist. Dadurch ist die Drehmomentenstütze 40 fest und drehfest im Rahmen angeordnet. Am anderen Ende sitzt ein Vierkantabschnitt des Torsionsstabs 36 in einem zylindrischen Bauteil 50, das in der Koppelstange 30 verschweißt ist. In einer Innengewindebohrung 52 des Torsionsstabs 36 sitzt eine Senkschraube 54, die ihrerseits von einer Sicherungsscheibe 56 gesichert ist. Die axiale Vorspannung des Torsionsstabs 36 kann durch die Schraube 54 eingestellt werden.

Wie man aus den Figuren 1 bis 4 entnimmt, ist bezüglich beider Stützrollen 18, 20 ein Hydraulikdämpfer 54, 56 vorgesehen, der am oberen Ende an der Innenseite der Platten 10, 12 angelenkt und am unteren Ende mit dem Armabschnitt 32 gelenkig verbunden ist.

Das äußere Ende des Lagerbauteils 50 nach Fig. 5 sitzt drehbar in einer entsprechenden Lagerausnehmung der Platte 12, wie aus Fig. 1 oder 3 zu erkennen.

Bei 58 ist ein mechanischer Anschlag für das Stützrollenlagerbauteil vorgesehen, das verhindert, dass die Stützrollen zu weit nach unten abkippen, wenn sie sich gegenüber dem Untergrund anheben. Mit der Drehmomentenstütze 40 ist auch ein Bolzen 60 verschraubt (siehe etwa Fig. 9), der als Gewindestift für Spielfreiheit zwischen der Koppelstange 30 und dem Fahrzeugrahmen sorgt.

Es ist zu erkennen, dass der Torsionsstab 36 als zentrale Feder für die Koppelstange 30 dient, die einem Anheben der Stützrollen 18, 20 aufgrund seiner Verdrehung entgegenwirkt. Dieser Bewegung wirken auch die Hydraulikdämpfer 54, 56 entgegen, letztere jedoch nur temporär, während der Torsionsstab 36 statisch wirkt.

Wie erkennbar, ist die gesamte Konstruktion zur Aufnahme der Stützrollen 18, 20 einschließlich der Koppelvorrichtung und der Feder ein vorfertigbares Bauteil, das ohne weiteres am Rahmen des Gabelhubwagens angebracht werden kann.

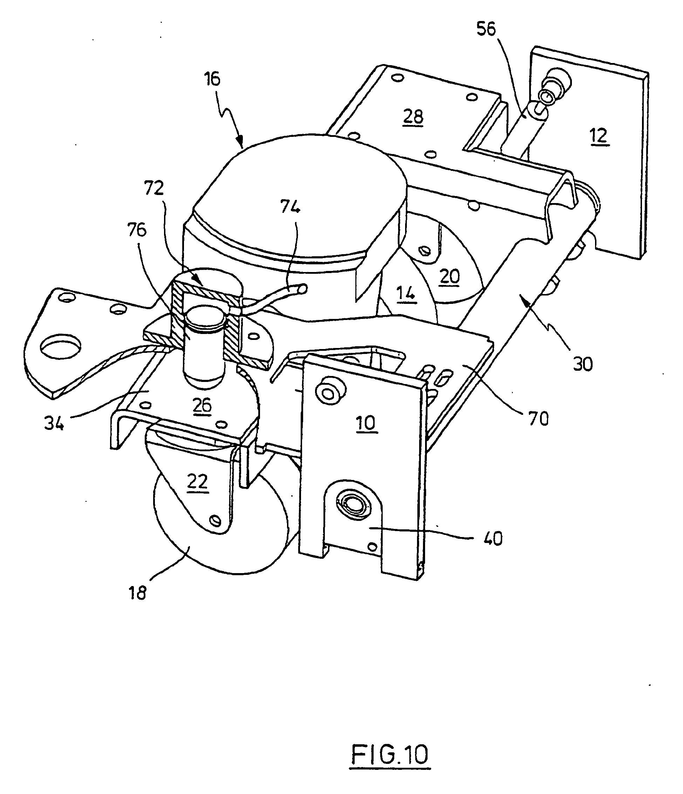

Bei der Ausführungsform nach Fig. 10 werden diejenigen Teile mit gleichen Bezugszeichen versehen wie die nach Fig. 1 und den nachfolgenden Figuren, soweit sie übereinstimmen. In Fig. 10 ist zum Teil ein Bodenblech 70 des Fahrwerkrahmens zu erkennen, an dem auch die Platten 10, 12 angebracht sind. Man erkennt außerdem, dass auf dem Bodenblech ein Zylinder 72 befestigt ist, der über eine Hydraulikleitung 74 mit Hydraulikmedium versorgt wird. Im Zylinder 72 ist ein Kolben 76 angeordnet. Der Kolben kann mit Hilfe eines entsprechenden Hydraulikdrucks in eine definierte Stellung (Endlage) verbracht werden. Das freie Ende des Kolbens 76 wirkt auf die Oberseite des Arms 26, genauer auf die Platte 34 und begrenzt mithin das Anheben der Stützrollen 18, 20. Mithin handelt es sich um eine Verriegelungsvorrichtung, welche in Abhängigkeit von der Stellung des Kolbens 76 die Verstellung der Stützräder 18, 20 nach oben begrenzt. Es ist auch denkbar, die Stützrollen 18, 20 völlig starr zu lagern. Die Stellung des Kolbens 76 kann von verschiedenen Betriebsparametern des nicht gezeigten Gabelhubwagens abhängig gemacht werden, beispielsweise von der Höhe des Lastteils, dem Lastgewicht oder sonstigen Größen.

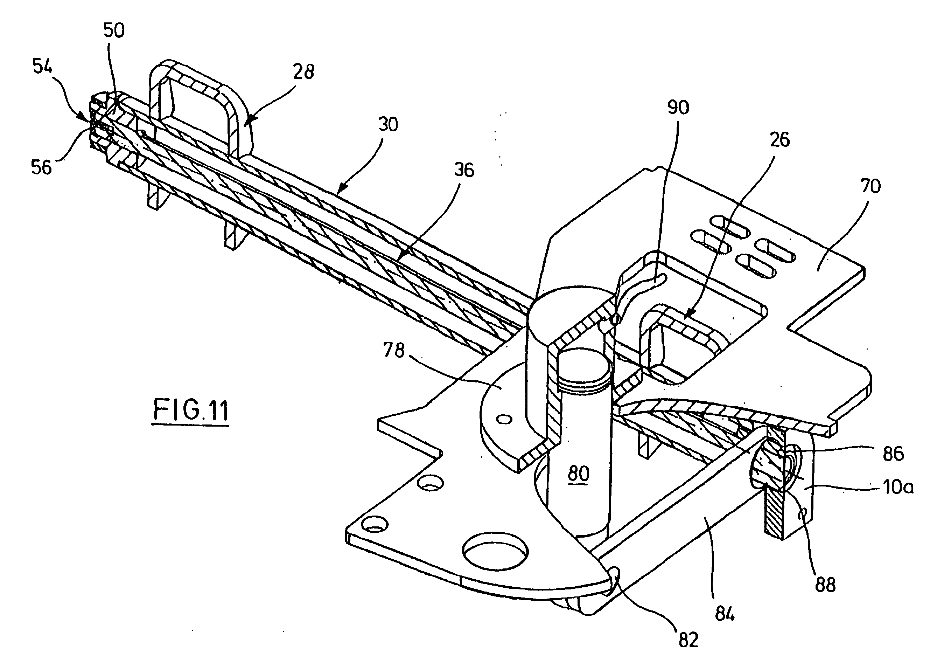

Fig. 11 zeigt eine ähnliche Darstellung wie Fig. 5, wobei zusätzlich die bereits in Fig. 10 beschriebene Bodenplatte 70 zu erkennen ist. Auf der Bodenplatte 70 ist ein Zylinder 78 befestigt mit einer Kolbenstange 80. Die Kolbenstange 80 des Hydraulikzylinders 78 ist an einem Hebelarm 84 bei 82 angelenkt, der drehfest mit dem Torsionsstab 36 verbunden ist. Diese Verbindung erfolgt über ein Lagerbauteil 86, das drehbar in der Koppelstange 30 gelagert ist und drehbar in einer Bohrung 88 der abgewandelten Rahmenplatte 10a. Mit Hilfe des Zylinders 78 kann mithin die Vorspannung des Torsionsstabs 36 eingestellt werden, der am in Fig. 11 linken Ende drehfest mit der Koppelstange 30 verbunden ist. Die Vorspannung kann auf einen festen Wert eingestellt werden oder in Abhängigkeit von Betriebsparametern verändert werden.

Die Zufuhr des Hydraulikmediums zum Zylinder 78 erfolgt über die Zuleitung 90. Es versteht sich, dass auch bei der Ausführungsform nach Fig. 11 ein Verriegelungszylinder gemäß Fig. 10 vorgesehen werden kann. Dieser ist jedoch aus Darstellungsgründen nicht gezeigt.

## Patentansprüche

1. Gabelhubwagen mit einem Fünfradfahrwerk, mit einem höhenunbeweglichen Antriebsrad (14), zwei Stützrollen (18,20) im Antriebsteil des Hubwagens, deren. Jeweiliges Lagerbauteil um eine annähernd vertikale Achse verschwenkbar gelagert ist, einer mit den Lagerbauteilen gekoppelten Koppelstange (30), die um eine horizontale Achse drehbar im Rahmen des Hubwagens gelagert ist und zwei Lagerarme (26, 28) aufweist, die mit den Lagerbauteilen verbunden sind und einer zentralen Stabilisierungsfeder (36), die am Rahmen abgestützt ist und auf die Koppelstange (30) so einwirkt, dass auf die Stützrollen (18, 20) eine nach unten gerichtete Druckkraft übertragen wird, wobei mit der Koppelstange (30) zusätzlich ein die Drehung der Koppelstange (30) dämpfendes Dämpferalement (54, 56) zusammenwirkt **dadurch gekennzeichnet, dass** unmittelbar zwischen dem Rahmen und einem an der Koppelstange (30) befindlichen Arm mindestens ein linear wirkender Hydraulikdämpfer (54, 56) angeordnet ist, wobei der die Stützrollenlast temporäre aufnimmt.

2. Gabelhubwagen nach Anspruch 1, **dadurch gekennzeichnet, dass** mit der Koppelstange (30) ein Drehdämpfer zusammenwirkt.

3. Gabelhubwagen nach Anspruch 1, **dadurch gekennzeichnet, dass** der Hydraulikdämpfer an einem Lagerbauteil (26, 28, 22, 24) angelenkt ist.

4. Gabelhubwagen nach einem der Ansprüche 1 bis 3, **dadurch gekennzeichnet, dass** die Stabilisierungsfeder von einem Torsionsfederelement, insbesondere einem Torsionsstab (36) gebildet ist, der in derhohlen Koppelstange (30) angeordnet ist, der an einem Ende drehfest mit dem Rahmen und am anderen Ende drehfest mit der Koppelstange (30) verbunden ist.

5. Gabelhubwagen nach Anspruch 4, **dadurch gekennzeichnet, dass** ein Lagerbock (38, 40) für die Koppelstange (30) die Drehmomentstütze für den Torsionsstab (36) bildet und unverdrehbar In eine Aufnahmeausnehmung (46) des Rahmens (10) aufgenommen ist

6. Gabeihubwagen nach einem der Ansprüche 1 bis 5, **dadurch gekennzeichnet**, daas die Koppelstange (30) in zweiparallel beabstandeten Blechplatten (10, 12) des Rahmens gelegert ist.

7. Gabelhubwegen nach Ansprüchen 1 und 6, **dadurch gekennzeichnet, dass** der Hydraulikzylinder (54, 56) an der zugeordneten Blechplatte (10, 12) angelenkt ist.

8. Gabelhubwagen nach einem der Ansprüche 4 bis 7, wenn abhängig von Anspruch 5, **dadurch** gekenn. zeichnet, dass ein Kraftglied vorgesehen ist das ein Drehmoment am Torsionsstab (36) erzeugt zur Erzeugung einer Vorspannung.

9. Gabelhubwagen nach Anspruch 8, **dadurch gekennzeichnet dass** das Kraftglled in Abhängigkeit von einem Betriebsparameter verstellbar ist.

10. Gabelhubwagen nach Anspruch 8 oder 9 **dadurch gekennzeichnet, dass** mit dem Torsionstab drehfest ein Hebelarm verbunden ist auf den ein Vorspann-Hydraulikzylinder wirkt, der sich am Fahrzeugrahmen abstützt.

## Claims

1. A fork-lift truck having a five-wheeled running gear, comprising a driving wheel (14) which is immovable in height, two supporting rollers (18, 20) in the driving train of the fork-lift truck the respective bearing component of which is pivotally supported about an approximately vertical axis, a coupling rod (30) coupled to the bearing components which is supported to be rotatable about a horizontal axis within the frame of the fork-lift truck and has two bearing arms (26 28) which are connected to the bearing components, and a central stabilization spring (36) which is supported by the frame and acts onto the coupling rod (30) so as to transmit a downward compressive force onto the supporting rollers (18, 20), wherein a damping element (54, 56) attenuating the rotation of the coupling rod (30) additionally interacts with the coupling rod (30), **characterized in that** at least one hydraulic damper (54, 56) which acts linearly is disposed directly between the frame and an arm located on the coupling rod (30), the hydraulic damper (54, 56) temporarily carrying the supporting load.

2. The fork-lift truck according to claim 2, **characterized in that** a rotary damper interacts with the coupling rod (30).

3. The fork-lift truck according to claim 1, **characterized in that** the hydraulic damper is hinged to a bearing component (26, 28, 22, 24).

4. The fork-lift truck according to any one of claims 1 to 3, **characterized in that** the stabilization spring (36) is defined by a torsion spring element, particularly a torsion bar (36), which is disposed in the hollow coupling rod (30) and is joined to be fixed to the frame for rotation at one end and to be fixed to the coupling rod (30) for rotation at the other end.

5. The fork-lift truck according to claim 4, **characterized in that** a bearing block (38, 40) for the coupling rod (30) defines the stator for the torsion bar (36) and is received non-torsionally in a receiving recess (46) of the frame (10).

6. The fork-lift truck according to any one of claims 1 to 5, **characterized in that** the coupling rod (30) is mounted in two parallel-spaced sheet metal plates (10, 12) of the frame.

7. The fork-lift truck according to any one of claims 1 and 6, **characterized in that** the hydraulic cylinder (54, 56) is hinged to the associated sheet metal plate (10, 12).

8. The fork-lift truck according to any one of claims 4 to 7 if dependent on claim 5, **characterized in that** a power member is provided which generates a torque on the torsion bar (36) for the generation of a bias.

9. The fork-lift truck according to claim 8, **characterized in that** the power member is adjustable in dependence on an operating parameter.

10. The fork-lift truck according to claim 8 or 9, **characterized in that** the torsion bar has fixedly connected thereto for rotation a lever arm which is acted on by a biasing hydraulic cylinder which is supported on the vehicle frame.

## Revendications

1. Transpalette avec une châssis à cinq roues, avec une roue d'entraînement (14) immobile en hauteur, deux rouleaux d'appui (18, 20) dans la partie d'entraînement du chariot élévateur, dont chaque composant de palier repose en pivotement autour d'un axe approximativement vertical, une tige de couplage (30) couplée aux composants de palier et qui repose en rotation dans le cadre du chariot élévateur autour d'un axe horizontal et qui présente deux bras de palier (26, 28) qui sont raccordés aux composants de palier, et un ressort de stabilisation (36) central qui repose sur le cadre et agit sur la tige de couplage (30) de sorte qu'une force de pression dirigée vers le bas est transmise aux rouleaux d'appui (18, 20), où un élément amortisseur (54, 56) amortissant la rotation de la tige de couplage (30) coopère en plus avec la tige de couplage (30), **caractérisé en ce que**, entre le cadre et un bras situé sur la tige de couplage (30), il est disposé au moins un amortisseur hydraulique (54, 56) à action linéaire qui porte le poids des rouleaux d'appui temporairement.

2. Transpalette selon la revendication 1, **caractérisé en ce qu'**un amortisseur de rotation coopère avec la tige de couplage (30).

3. Transpalette selon la revendication 1, **caractérisé en ce que** l'amortisseur hydraulique est articulé sur un composant de palier (26, 28, 22, 24).

4. Transpalette selon la revendication 1 à 3, **caractérisé en ce que** le ressort de stabilisation est formé d'un élément de ressort à torsion, en particulier d'une barre de torsion (36) qui est disposée dans la tige de couplage (30) creuse, qui est raccordée, à une extrémité, de façon anti giratoire au cadre et, à une autre extrémité, de façon anti giratoire à la tige de couplage (30).

5. Transpalette selon la revendication 4, **caractérisé en ce qu'**un support de palier (38, 40) forme pour la tige de couplage (30) l'appui de couple pour la barre de torsion (36) et est logé de façon non rotative dans un évidement de logement (46) du cadre (10).

6. Transpalette selon la revendication 1 à 5, **caractérisé en ce que** la tige de couplage (30) repose dans deux plaques métalliques (10, 12) du cadre espacées parallèlement.

7. Transpalette selon la revendication 1 et 6, **caractérisé en ce que** le vérin hydraulique (54, 56) est articulé sur la plaque métallique (10, 12) affectée.

8. Transpalette selon la revendication 4 à 7, quand elle dépend de la revendication 5, **caractérisé en ce qu'**il est prévu un organe de force qui produit un couple sur la barre de torsion (36) en vue de produire une prétension.

9. Transpalette selon la revendication 8, **caractérisé en ce que** l'organe de force peut être réglé en fonction d'un paramètre de fonctionnement.

10. Transpalette selon la revendication 8 ou 9, **caractérisé en ce qu'**un bras de levier est raccordé de façon anti giratoire à la barre de torsion et subit l'action d'un vérin hydraulique de prétension qui repose sur le cadre de véhicule.
